# EUROPÄISCHE PATENTANMELDUNG

(11) **EP 3 965 047 A1**
(43) Veröffentlichungstag der Anmeldung: **09.03.2022**
(21) Anmeldenummer: 21189342.5
(22) Anmeldetag: 03.08.2021
(51) Int. Cl.: G06Q 30/06, G06Q 50/02

(54) **VERFAHREN ZUR VERNETZUNG VON MEHREREN LANDWIRTSCHAFTLICHEN BETRIEBEN**

(30) Priorität: 03.09.2020 DE 102020123002
(71) Anmelder: 365FarmNet Group KGaA mbH & Co. KG, 33428 Harsewinkel (DE)
(72) Erfinder: Grundmann, Marten, 10829 Berlin (DE)
(74) Vertreter: CLAAS Gruppe

(57) **Zusammenfassung**

Die vorliegende Erfindung betrifft ein Verfahren zur Vernetzung von mehreren landwirtschaftlichen Betrieben (1a, 1b, 1c) mittels einer Serverplattform (2), wobei die landwirtschaftlichen Betriebe (1a, 1b, 1c) zur Planung von landwirtschaftlichen Prozessen, zur Durchführung der landwirtschaftlichen Prozesse sowie zur Verwaltung von erforderlichen Ressourcen (12) zumindest ein computergestütztes Verwaltungssystem (4, 5) verwenden,
wobei die Serverplattform (2) eine Eingabeschnittstelle (14) aufweist, welche der Eingabe und/oder dem Empfang von auswählbaren Basisdaten eines jeden mit der Serverplattform (2) verbundenen Betriebes (1a, 1b, 1c) dient,
wobei die Serverplattform (2) eine Datenschnittstelle (15) aufweist, welche der Bereitstellung von Informationen über Ressourcen zur Durchführung der landwirtschaftlichen Prozesse dient, die von zumindest einem Ressourcenanbieter (3a, 3b, 3c) bereitgestellt werden,
wobei die Serverplattform (2) eine Auswertung der von dem zumindest einen Verwaltungssystem (4, 5) übermittelten Basisdaten durchführt, um wenigstens einen Ressourcenbedarf mehrerer Betriebe (1a, 1b, 1c) zu aggregieren, und
wobei die Serverplattform (2) unter Berücksichtigung der aggregierten Ressourcenbedarfe und der Informationen des zumindest einen Ressourcenanbieters (3a, 3b, 3c) automatisch einen Ressourcenanbieter (3a, 3b, c) auswählt und das mit dem wenigstens einen aggregierten Ressourcenbedarf korrespondierende Angebot übermittelt.

## Beschreibung

Die vorliegende Erfindung betrifft ein Verfahren zur Vernetzung von mehreren landwirtschaftlichen Betrieben mittels einer Serverplattform gemäß dem Anspruch 1 sowie eine Serverplattform als solche gemäß dem Anspruch 15.

Landwirtschaftliche Betriebe benötigen regelmäßig wiederkehrend Ressourcen unterschiedlichster Art, um den Anbau von Erntegut und/oder das Betreiben von Viehwirtschaft durchführen zu können. Hierfür können je nach Art der einzusetzenden Ressourcen zu unterschiedlichen Zeitpunkten Bedarfe entstehen, welche die landwirtschaftlichen Betriebe, mitunter zeitnah, abdecken müssen, um landwirtschaftliche Prozesse zu planen und die Bereitstellung der für eine Durchführung der landwirtschaftlichen Prozesse notwendigen Ressourcen gewährleisten zu können.

Aufgrund des stetig zunehmenden Kostendrucks bei der Erzeugung von landwirtschaftlichen sowie viehwirtschaftlichen Produkten kommt der möglichst preiseffizienten Beschaffung von Ressourcen eine besondere Bedeutung zu.

Vor diesem Hintergrund liegt der Erfindung die Aufgabe zugrunde, ein Verfahren zur Vernetzung von mehreren landwirtschaftlichen Betrieben anzugeben, welches eine optimierte Ressourcenbeschaffung ermöglicht.

Diese Aufgabe wird durch ein Verfahren mit den Merkmalen des Anspruches 1 gelöst. Vorteilhafte Weiterbildungen sind Gegenstand der Unteransprüche.

Wesentlich ist die grundlegende Erkenntnis, dass durch eine Bündelung der Ressourcenbeschaffung mehrerer landwirtschaftlicher Betriebe mittels einer Serverplattform eine Konzentration erreicht werden kann, welche zu größeren Einkaufsvolumina führt. Mit größeren Einkaufsvolumina lassen sich in der Regel verbesserte Einkaufskonditionen bei der Ressourcenbeschaffung erzielen.

Gemäß dem Anspruch 1 wird ein Verfahren zur Vernetzung von mehreren landwirtschaftlichen Betrieben mittels einer Serverplattform vorgeschlagen, wobei die landwirtschaftlichen Betriebe zur Planung von landwirtschaftlichen Prozessen, zur Durchführung der landwirtschaftlichen Prozesse sowie zur Verwaltung der erforderlichen Ressourcen zumindest ein computergestütztes Verwaltungssystem verwenden. Die Serverplattform weist eine Eingabeschnittstelle auf, welche der Eingabe und/oder dem Empfang von auswählbaren Basisdaten eines jeden mit der Serverplattform verbundenen Betriebes dient. Die Auswählbarkeit von Basisdaten bietet dem Betreiber des jeweiligen Betriebes die Möglichkeit, Einfluss auf die zu übermittelnden Daten zu nehmen. Die Serverplattform weist eine Datenschnittstelle auf, welche der Bereitstellung von Informationen über Ressourcen zur Durchführung der landwirtschaftlichen Prozesse dient, die von zumindest einem Ressourcenanbieter bereitgestellt werden. Die Serverplattform führt eine Auswertung der von dem zumindest einen Verwaltungssystem übermittelten Basisdaten durch, um wenigstens einen Ressourcenbedarf mehrerer Betriebe zu aggregieren. Die Serverplattform wählt unter Berücksichtigung des wenigstens einen aggregierten Ressourcenbedarfs und der Informationen des zumindest einen Ressourcenanbieters automatisch einen Ressourcenanbieter aus und übermittelt das mit dem wenigstens einen Ressourcenbedarf korrespondierende Angebot des ausgewählten Ressourcenanbieters.

Es kann für jeden landwirtschaftlichen Betrieb ein eigenes Verwaltungssystem vorgesehene sein, das mit der Serverplattform kommuniziert. Denkbar ist auch ein zentralisiertes Verwaltungssystem, welches von mehreren der landwirtschaftlichen Betriebe genutzt wird.

Bevorzugt können die Ressourcenbedarfe der landwirtschaftlichen Betriebe hinsichtlich ihrer Identität oder Ähnlichkeit geprüft und aggregiert werden. Hierdurch können identische oder ähnliche Ressourcen bestimmt werden, die eine Bündelung ermöglichen. Eine Ähnlichkeit von Ressourcen kann bedeuten, dass es sich lediglich um verschiedene Hersteller einer im Übrigen gleichen Ressource handelt. Diese Informationen können als Basisdaten vom Verwaltungssystem mittels der Eingabeschnittstelle an die Serverplattform übermittelt werden. Dadurch können auch die Angebotsvielfalt und die daraus resultierende Verfügbarkeit einer spezifischen Ressource abgeleitet werden.

Besonders vorteilhaft ist es, wenn die Ressourcenbedarfe der landwirtschaftlichen Betriebe hinsichtlich einer zeitlichen Bedarfsübereinstimmung geprüft und aggregiert werden können. Dabei können sich insbesondere bezüglich der Planung für eine Aussaat, das Ausbringen von Düngemitteln, dem Einsatz von Pflanzenschutzmitteln oder dergleichen zeitliche Bedarfsübereinstimmungen ergeben. Eine zeitliche Bedarfsübereinstimmung kann auch aus dem Anbau gleicher Fruchtfolgen verschiedener landwirtschaftlicher Betriebe resultieren. Diese Informationen können als Basisdaten vom Verwaltungssystem mittels der Eingabeschnittstelle an die Serverplattform übermittelt werden.

Weiterhin ist es vorteilhaft, wenn landwirtschaftliche Betriebe hinsichtlich des Bestehens einer räumlicher Nähe zueinander mittels Lokalisierungsdaten geprüft und aggregiert werden. Hierdurch kann der logistische Aufwand der Auslieferung von Ressourcen reduziert bzw. optimiert werden. Lokalisierungsdaten können, neben konventionellen Adressdaten der landwirtschaftlichen Betriebe, darüber hinaus beispielsweise GPS-Daten oder eine IP-Adresse des Verwaltungssystems sein.

Dabei können als Ressourcen der landwirtschaftlichen Betriebe, für die Ressourcenbedarf besteht, Rohstoffe, Hilfsmittel, Betriebsmittel und/oder Ersatzteile für landwirtschaftliche Arbeitsmaschinen und/oder Arbeitsaggregate durch die Serverplattform vermittelt werden. Hierbei bildet beispielsweise Saatgut einen Rohstoff als Ausgangsbasis für das spätere landwirtschaftliche Erzeugnis. Hilfsmittel können beispielsweise Dünger, Pflanzenschutzmittel, Siliermittel und dergleichen sein, welche den Prozess des Wachstums oder der Verarbeitung des Erntegutes begünstigen bzw. unterstützen. Weitere Hilfsmittel können Futter, Stroh und dergleichen sein, die in landwirtschaftlichen Betrieben mit Viehhaltung erforderlich sind. Als Betriebsmittel kommen unter anderem Mittel in Betracht, die insbesondere den Betrieb von landwirtschaftlichen Arbeitsmaschinen und Arbeitsaggregaten ermöglichen. Betriebsmittel können somit Schmierstoffe, Kraftstoffe und dergleichen mehr sein. Unter Betriebsmitteln können auch Ersatzteile verstanden werden, die in signifikanter Größenordnung eingesetzt werden und die aufgrund des Betreibens von Arbeitsmaschine und/oder Arbeitsaggregate regelmäßig verschleißen.

Insbesondere kann der jeweilige Ressourcenbedarf eines einzelnen landwirtschaftlichen Betriebes auf der Basis von in dem zumindest einen Verwaltungssystem hinterlegten quantifizierbaren Daten bestimmt werden, wobei es sich um Stammdaten, Verbrauchsdaten, Lagerbestandsdaten, Planungsdaten, Ertragsdaten sowie Beschaffungsdaten handelt. Insbesondere kann eine mittels des Verwaltungssystems des jeweiligen Betriebes dokumentierte Verbrauchshistorie bei der Bedarfsplanung eine Basis bilden, welche durch eine Auswerteinheit der Serverplattform analysiert wird. Die individuelle Verbrauchshistorie eines jeweiligen landwirtschaftlichen Betriebes kann unter anderem Auskunft geben über Zeitpunkt, Menge, Ort, Art sowie Hersteller der verwendeten Ressource. Die Verbrauchshistorie kann somit zumindest Stammdaten und Verbrauchsdaten wiedergeben. Weiterhin werden Lagerbestandsdaten bei der Bestimmung des Ressourcenbedarfs berücksichtigt. Zusätzlich können aber auch Angaben zur Lagerkapazität bei der Bestimmung des Ressourcenbedarfs berücksichtigt werden. Für die Bestimmung des Ressourcenbedarfs besonders wichtig sind die Planungsdaten und/oder Ertragsdaten, um einen sich ändernden Bedarf, beispielsweise wegen einer Fruchtart- oder Fruchtfolgenänderung oder einer Änderung der zu bewirtschaftenden landwirtschaftlich genutzten Flächen bestimmen zu können. Darüber hinaus beeinflussen Beschaffungsdaten wie der individuelle Bestellzeitpunkt einer Ressource, ein spezifischer Ressourcenanbieter, die Bestimmung des Ressourcenbedarfs.

Bevorzugt können Informationen des zumindest einen Ressourcenanbieters durch ein Abfragetool der Serverplattform bestimmt werden, wobei das Abfragetool in einem Netzwerk, insbesondere im Internet, verfügbare Produktdaten des zumindest einen Ressourcenanbieters ermittelt und auswertet, und dass die ermittelten Produktdaten mit verfügbaren Produktdaten anderer Ressourcenanbieter verglichen werden. Hierzu können beispielsweise auf einer Homepage eines Ressourcenanbieters veröffentlichte Produktdaten zu den angebotenen Ressourcen abgerufen werden. Produktdaten können unter anderem neben der Art oder dem Hersteller einer Ressource deren Verfügbarkeit, Lieferzeitraum, und deren Preis umfassen.

Alternativ oder zusätzlich kann von der Serverplattform eine Anfrage in Abhängigkeit vom bestimmten Ressourcenbedarf zur Bereitstellung von Produktdaten durch den zumindest einen Ressourcenanbieter an diesen automatisiert generiert und versandt werden. Dabei kann auf Grundlage der Auswertung der Basisdaten, wie der lokalen oder regionalen Lage der landwirtschaftlichen Betriebe, der Art des Ressourcenbedarfs, etc., eine Bestimmung von potentiellen Ressourcenanbietern durchgeführt werden, denen eine automatisiert generierte Anfrage zugesandt wird. Die Ressourcenanbieter können auf Basis des aggregierten Ressourcenbedarfs erstellte Angebote abgeben, die mittels der Datenschnittstelle an die Serverplattform übertragen werden.

Alternativ oder zusätzlich kann der zumindest eine Ressourcenanbieter mittels der Datenschnittstelle für die Angebotserstellung relevante Daten bezüglich seiner Ressourcen bereitstellen. Dies ermöglicht es dem zumindest einen Ressourcenanbieter selbsttätig die Produktdaten bereitzustellen, die für eine Bewertung zur Auswahl eines Ressourcenanbieters erforderlich sind. Dies kann beispielsweise in der Form von Preislisten geschehen, die von dem zumindest einen Ressourcenanbieter mittels der Datenschnittstelle an die Serverplattform übertragen werden.

Bei den Produktdaten des zumindest einen Ressourcenanbieters kann es sich, neben der Art der verfügbaren Ressourcen, unter anderem um Lieferkonditionen, verfügbare Mengen, Lieferzeiträume und dergleichen mehr handeln. Das Zusammenführen von Basisdaten der landwirtschaftlichen Betriebe einerseits und den Produktdaten des zumindest einen Ressourcenanbieters andererseits, ermöglicht es der Serverplattform beispielsweise mittels der Auswerteeinheit den Betreibern der landwirtschaftlichen Betriebe Hinweise auf etwaige Lieferengpässe einer spezifischen Ressource zu geben. Umgekehrt kann der zumindest eine Ressourcenanbieter seitens der Serverplattform frühzeitig auf einen zunehmenden Bedarf an einer spezifischen Ressource hingewiesen werden.

Bevorzugt kann eine Antwort des zumindest einen Ressourcenanbieters auf die Anfrage und/oder mittels der Datenschnittstelle bereitgestellte relevante Produktdaten von der Serverplattform automatisch ausgewertet und mit verfügbaren Informationen anderer Ressourcenanbieter verglichen werden. Somit kann auf Grundlage der Auswertung ein optimiertes Angebot erstellt werden. Dem liegt zugrunde, dass mehrere Ressourcenanbieter jeweils ein Angebot auf die aggregierte Ressourcenanfrage abgeben und dass die Serverplattform automatisch das günstigste Angebot auswählt.

Insbesondere kann das Angebot an das jeweilige Verwaltungssystem der vernetzten Betriebe übermittelt werden. Dies erlaubt es den Betreibern der landwirtschaftlichen Betriebe, ein von der Serverplattform ermitteltes optimiertes Angebot zu verifizieren und freizugeben oder abzulehnen.

Bevorzugt kann das zumindest eine Verwaltungssystem eines landwirtschaftlichen Betriebes zentral auf der Serverplattform bereitgestellt und ausgeführt werden. Hierdurch wird der Datentransfer des jeweiligen angeschlossenen Betriebes zur Serverplattform vereinfacht. Die relevanten Basisdaten eines jeden durch die Serverplattform vernetzten landwirtschaftlichen Betriebes liegen zentral und regelmäßig aktualisiert vor. So lassen sich Änderung im Bestand an Rohstoffen oder Hilfs- und Betriebsstoffen beispielsweise durch eine landwirtschaftliche Arbeitsmaschine und/oder ein landwirtschaftliches Arbeitsaggregat protokollieren, indem beispielsweise die Ausbringung von Saatgut, Dünger oder Pflanzenschutzmitteln sensorisch erfasst und georeferenziert im Verwaltungssystem hinterlegt wird. Anhand von Einsatzdauer, zurückgelegter Wegstrecke und/oder Verbrauchsmessung durch die landwirtschaftliche Arbeitsmaschine lässt sich der Verbrauch von Hilfs- und Betriebsstoffen ermitteln und protokollieren.

Vorzugsweise können zum Datenaustausch zwischen den Verwaltungssystemen eines jeweiligen landwirtschaftlichen Betriebes und der Serverplattform eine plattformunabhängige Sprache oder ein plattformunabhängiges Kommunikationsprotokoll verwendet werden. Dies ist vorteilhaft, wenn Verwaltungssysteme unterschiedlicher Anbieter oder verschiedener Betreiber im Fall zentralisierter Verwaltungssysteme auf den landwirtschaftlichen Betrieben zum Einsatz kommen, die untereinander in der Regel nicht kommunizieren. Beispielsweise kann eine Übermittlung von ausgewählten Basisdaten mittels einer erweiterbaren Auszeichnungssprache (z.B. Extensible Markup Language - XML) zwischen dem jeweiligen Verwaltungssystem und der Serverplattform durchgeführt werden.

Nach einer weiteren Lehre gemäß dem Anspruch 15, der eigenständige Bedeutung zukommt, wird eine Serverplattform ausgestaltet zur Verwendung in einem vorschlagsgemäßen Verfahren beansprucht. Auf alle Ausführungen zu dem vorschlagsgemäßen Verfahren darf verwiesen werden.

Die vorliegende Erfindung wird nachstehend anhand eines in den Zeichnungen dargestellten Ausführungsbeispieles näher erläutert.

Es zeigen:
Fig. 1 eine schematische Darstellung einer Übersicht von landwirtschaftlichen Betrieben und Ressourcenanbietern landwirtschaftlicher Ressourcen, die über eine Serverplattform miteinander im Austausch stehen; und
Fig. 2 schematisch das vorschlagsgemäße Verfahren zur Vernetzung von mehreren landwirtschaftlichen Betrieben mittels der Serverplattform.

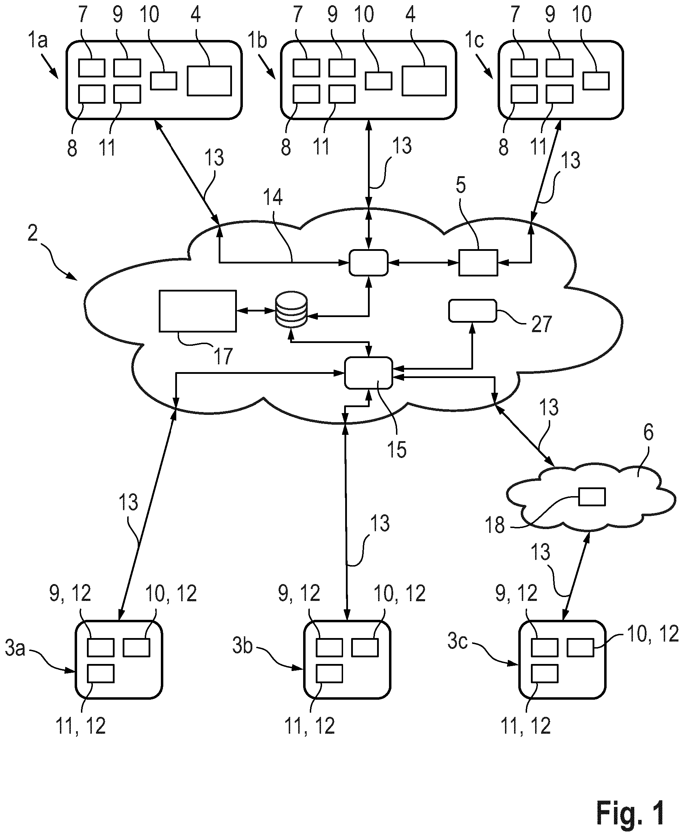

In Fig. 1 ist eine schematische Darstellung einer Übersicht von mehreren landwirtschaftlichen Betrieben 1a, 1b, 1c und verschiedenen Ressourcenanbietern 3a, 3b, 3c von Ressourcen für die landwirtschaftlichen Betriebe 1a, 1b, 1c gezeigt, die über eine Serverplattform 2 miteinander im indirekten Austausch stehen. Die landwirtschaftlichen Betriebe 1a, 1b, 1c umfassen für eine Durchführung landwirtschaftlicher Prozesse, wie den Anbau und das Ernten von Erntegut und/oder das Betreiben von Viehwirtschaft, landwirtschaftliche Arbeitsmaschinen 7, landwirtschaftliche Arbeitsaggregate 8, Rohstoffe 9, Hilfsmittel 10 und Betriebsmittel 11, wobei Rohstoffe 9, Hilfsmittel 10 und Betriebsmittel 11 nachfolgend verallgemeinernd als Ressourcen 12 bezeichnet werden. Zur Planung und Durchführung von landwirtschaftlichen Prozessen sowie zur Verwaltung der Ressourcen 12 eines landwirtschaftlichen Betriebes 1a, 1b, 1c ist ein computergestütztes Verwaltungssystem 4, 5 vorgesehen. Das computergestützte Verwaltungssystem 4 befindet sich für die Betriebe 1a, 1b beispielhaft auf deren Betriebsgelände respektive in einer Hofstatt.

Das computergestützte Verwaltungssystem 4, 5 umfasst eine Recheneinheit, eine Speichereinheit sowie eine Eingabe-Ausgabeeinheit. In der Speichereinheit ist zumindest eine Datenbank hinterlegt. Die Recheneinheit dient unter anderem der Ausführung von in der Speichereinheit hinterlegbarem Programmcode. Mittels des Verwaltungssystems 4 werden unter anderem die Bestände der Ressourcen 12 verwaltet. Das Verwalteten von Ressourcen 12 umfasst dabei das Erfassen von Informationen über die Lieferung, die Art, den Ressourcenanbieter 3a, 3b, 3c und/oder den Hersteller einer Ressource 12. Die Erfassung kann durch eine manuelle Eingabe von Daten in das Verwaltungssystem 4, 5 erfolgen oder automatisiert durch eine messtechnische Erfassung der Ressourcen 12. Weiterhin werden der Einsatz, die Entnahme bzw. der Verbrauch von Ressourcen 12 im Rahmen der Durchführung landwirtschaftlicher Prozesse erfasst und dokumentiert. Die Erfassung des Einsatzes, der Entnahme bzw. des Verbrauchs von Ressourcen 12 kann dabei beispielsweise durch die Arbeitsmaschinen 7 und/oder die Arbeitsaggregate 8 messtechnisch mittels geeigneter Sensoreinrichtungen erfasst werden. Zudem kann die Erfassung durch die Arbeitsmaschinen 7 und/oder die Arbeitsaggregate 8 georeferenziert erfolgen. Auf diese Weise lässt sich der Ressourcenverbrauch einzelnen Einsatzorten von Arbeitsmaschinen 7 und/oder Arbeitsaggregaten 8, wie einem Schlag oder einer Betriebsstätte eines landwirtschaftlichen Betriebes 1a, 1b, 1c zuordnen.

Hierbei bildet beispielsweise Saatgut einen Rohstoff 9 als Ausgangsbasis für das spätere landwirtschaftliche Erzeugnis, welches durch eine Sämaschine als Arbeitsaggregat 8 ausgebracht wird. Hilfsmittel 10 können beispielsweise Dünger, Pflanzenschutzmittel, Siliermittel und dergleichen sein, welche den Prozess des Wachstums des Erntegutes oder dessen Bearbeitung oder Verarbeitung begünstigen bzw. unterstützen. Weitere Hilfsmittel 10 können Futter, Stroh und dergleichen sein, die in landwirtschaftlichen Betrieben 1a, 1b, 1c mit Viehhaltung erforderlich sind. Als Betriebsmittel 11 kommen unter anderem Mittel in Betracht, die vorrangig den Betrieb der landwirtschaftlichen Arbeitsmaschinen 7 und Arbeitsaggregate 8 ermöglichen. Betriebsmittel 11 können somit Schmierstoffe, Kraftstoffe und dergleichen mehr sein, die in großem Umfang verbraucht werden. Betriebsmittel 11 können aber auch Ersatzteile sein, die regelmäßig und in größerem Umfang beschafft werden müssen, um die Funktionsfähigkeit der Arbeitsmaschinen 7 und Arbeitsaggregate 8 zu gewährleisten.

Des Weiteren dient das Verwaltungssystem 4, 5 dazu, neben den Verbrauchsdaten von Ressourcen 12 auch Ertragsdaten eines Vorjahres zu dokumentieren, welche der Planung des Folgejahres zugrunde gelegt werden sollen bzw. die der Erstellung von Planungsdaten dienen. Beispielsweise werden Ertragsdaten dabei in der Regel durch die Arbeitsmaschinen 7 und/oder die Arbeitsaggregate 8 während oder nach einem Erntevorgang messtechnisch erfasst und an das Verwaltungssystem, insbesondere automatisch, übertragen. Auf diese Weise lässt sich der spezifische Einsatz von Rohstoffen 9, Hilfsmitteln 10 als auch Betriebsmitteln 11 dem erzielten Ertrag durch das Verwaltungssystem 4, 5 gegenüberstellen und auswerten, um Planungsdaten zu generieren.

Lediglich beispielhaft ist für den landwirtschaftlichen Betrieb 1c eine Alternative dargestellt, bei der das computergestützte Verwaltungssystem 5, dessen Struktur und Funktionsweise identisch mit dem vorstehend beschriebenen Verwaltungssystem 4 ist, Bestandteil der Serverplattform 2 sein kann. Das computergestützte Verwaltungssystem 5 kann hierzu cloudbasierend ausgeführt sein.

Die bidirektionale Kommunikation der landwirtschaftlichen Betriebe 1a, 1b, 1c mit der Serverplattform 2 erfolgt durch geeignete drahtlose oder drahtgebundene Kommunikationsmittel 13. Die Serverplattform 2 weist eine Eingabeschnittstelle 14 auf, welche der Eingabe und/oder dem Empfang von auswählbaren Basisdaten eines jeden mit der Serverplattform 2 verbundenen Betriebes 1a, 1b, 1c dient.

Die Ressourcenanbieter 3a, 3b, 3c bieten die für die landwirtschaftlichen Betriebe 1a, 1b, 1c erforderlichen Ressourcen 12 zumindest teilweise an. Wie die landwirtschaftlichen Betriebe 1a, 1b, 1c stehen die Ressourcenanbieter 3a, 3b, 3c durch geeignete Kommunikationsmittel 13 mit der Serverplattform 2 in Verbindung. Im beispielhaften Fall des Ressourcenanbieters 3c erfolgt die Kommunikation mit der Serverplattform 2 nicht unmittelbar über ein dezidiertes Kommunikationsmittel 13, sondern über ein öffentliches Netzwerk 6, insbesondere das Internet. Dabei kann das Netzwerk 6 im Fall des Internets zugleich als Datenquelle fungieren. Die Serverplattform 2 weist eine Datenschnittstelle 15 auf, welche der Bereitstellung von Informationen über zur Durchführung der landwirtschaftlichen Prozesse notwendige Ressourcen 12 dient, die von zumindest einem Ressourcenanbieter 3a, 3b, 3c bereitgestellt werden.

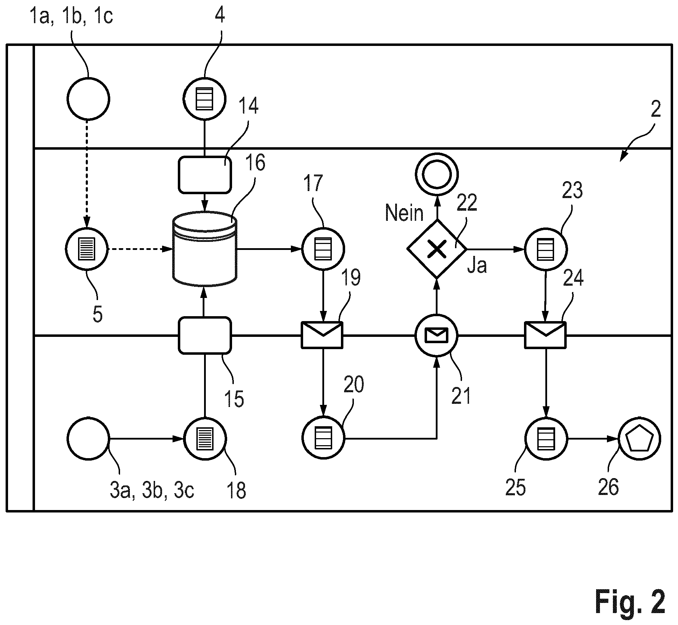

In Fig. 2 ist schematisch das vorschlagsgemäße Verfahren zur Vernetzung von mehreren landwirtschaftlichen Betrieben 1a, 1b, 1c mittels der Serverplattform 2 dargestellt. Die Betreiber der landwirtschaftlichen Betriebe 1a, 1b, 1c pflegen Daten in das jeweilige Verwaltungssystem 4, 5 ein, um die Nutzung der Ressourcen 12, den Einsatz von Arbeitsmaschinen 7 und/oder Arbeitsaggregaten 8 und die damit verbundenen erreichten Arbeitsergebnisse sowie Erträge zu protokollieren, wie weiter oben bereits ausgeführt wurde.

Von den computergestützten Verwaltungssystemen 4, 5 bereitgestellte und den Betreibern des jeweiligen landwirtschaftlichen Betriebes 1a, 1b, 1c vorzugsweise auswählbare Basisdaten werden über die Eingabeschnittstelle 14 an die Serverplattform 2 übermittelt. Der jeweilige Ressourcenbedarf eines einzelnen landwirtschaftlichen Betriebes 1a, 1b, 1c wird auf der Basis der im Verwaltungssystem 4, 5 hinterlegten quantifizierbaren Daten bestimmt, wobei es sich um Stammdaten, Verbrauchsdaten, Lagerbestandsdaten, Planungsdaten, Ertragsdaten sowie Beschaffungsdaten der Ressourcen 12 handelt. Diese Daten können dabei mit den von der Serverplattform 2 über die Eingabeschnittstelle 14 empfangenen oder eingegebenen Basisdaten identisch sein.

Die Basisdaten werden in einer Datenbank 16 der Serverplattform 2 zusammengeführt und einer Auswerteeinheit 17 zugeführt. Die Auswerteeinheit 17 wertet die Basisdaten der verschiedenen Betriebe 1a, 1b, 1c hinsichtlich bestehender Übereinstimmungen aus, um die Ressourcenbedarfe mehrerer Betriebe 1a, 1b, 1c zu aggregieren. Dazu können die Bedarfe an Ressourcen 12 der landwirtschaftlichen Betriebe 1a, 1b, 1c beispielsweise hinsichtlich ihrer Identität oder Ähnlichkeit geprüft und aggregiert werden. So kann beispielsweise durch die Auswerteeinheit 17 eine Übereinstimmung des Bedarfs an identischen Rohstoffen 9 der verschiedenen Betriebe 1a, 1b, 1c ermittelt werden. Eine Ähnlichkeit kann gegeben sein, wenn als Betriebsmittel 11 Schmierstoffe in den jeweiligen Betrieben 1a, 1b, 1c eingesetzt werden, die sich lediglich durch den Hersteller oder den Ressourcenanbieter 3a, 3b, 3c voneinander unterscheiden.

Ein weiterer Aspekt der Auswertung ist, dass die Ressourcenbedarfe der landwirtschaftlichen Betriebe 1a, 1b, 1c hinsichtlich ihrer zeitlichen Bedarfsübereinstimmung geprüft werden. Dabei können sich insbesondere aufgrund der durch das Verwaltungssystem 4, 5 erstellten Planungsdaten für eine Aussaat, das Ausbringen von Düngemitteln, Pflanzenschutzmitteln und dergleichen zeitliche Bedarfsübereinstimmungen ergeben. Eine zeitliche Bedarfsübereinstimmung kann im einfachsten Fall auch aus dem Anbau gleicher Fruchtfolgen der verschiedenen landwirtschaftlichen Betriebe 1a, 1b, 1c resultieren.

Weiterhin ist es vorteilhaft, wenn landwirtschaftliche Betriebe 1a, 1b, 1c hinsichtlich des Bestehens einer räumlichen Nähe zueinander mittels Lokalisierungsdaten geprüft werden. Auf diese Weise lassen sich zumindest regional zusammenhängende Betriebe 1a, 1b, 1c bestimmen und aggregieren. Hierdurch kann der logistische Aufwand der Auslieferung von Ressourcen 12 reduziert bzw. optimiert werden. Lokalisierungsdaten können, neben konventionellen Adressdaten der landwirtschaftlichen Betriebe 1a, 1b, 1c, beispielsweise GPS-Daten oder eine IP-Adresse des Verwaltungssystems 4 sein, sofern sich das Verwaltungssystem 4 auf der Hofstätte des Betriebes 1a, 1b befindet. Die Lokalisierungsdaten werden zudem auch mit Blick auf eine mögliche räumliche Nähe eines oder mehrerer Ressourcenanbieter 3a, 3b, 3c ausgewertet. Liefer- und Transportkosten können durch eine Aggregation mehrerer einzelner Ressourcenbestellungen reduziert werden.

Weitere Basisdaten, die von den Verwaltungssystemen 4, 5 bereitgestellt werden können, sind Informationen über die landwirtschaftlichen Betriebe 1a, 1b, 1c bzw. deren Betreiber. Dazu kann die jeweilige Einkaufshistorie, d.h. der individuelle Zeitpunkt eines jeweiligen Betriebes 1a, 1b, 1c eine Ressource 12 zu ordern bzw. zu kaufen, zählen und/oder die Bereitschaft des Betreibers eines Betriebe 1a, 1b, 1c für spezifische Ressourcen 12 eines Markenherstellers einen höheren Kaufpreis zu entrichten.

Die Auswerteeinheit 17 der Serverplattform 2 wertet die verfügbaren Basisdaten der verschiedenen Betriebe 1a, 1b, 1c aus und aggregiert auf diese Weise die Einkaufsvolumina für eine oder mehrere Ressourcen 12.

Auf Seiten der Ressourcenanbieter 3a, 3b, 3c besteht durch die Datenschnittstelle 15 Zugriff auf die zumindest eine Datenbank 16 der Serverplattform 2, um Produktdaten 18 für die verschiedenen Ressourcen 12 bereitstellen zu können. Hierzu können die Ressourcenanbieter 3a, 3b, 3c über die Datenschnittstelle 15 unter anderem die Produktdaten 18, die Preislisten, Verfügbarkeitsinformationen, spezifische Produktinformationen und dergleichen mehr umfassen, bereitstellen. Alternativ können die Ressourcenanbieter 3a, 3b, 3c von der Serverplattform 2 automatisch darüber informiert werden, dass eine Aggregation von mehreren landwirtschaftlichen Betrieben 1a, 1b, 1c erfolgt ist, die eine oder mehrere spezifische Ressourcen 12 bestellen wollen. Als Reaktion auf diese Informationsübermittlung darauf können die Ressourcenanbieter 3a, 3b, 3c ein individuelles Angebot über die Datenschnittstelle 15 übermitteln. Eine weitere Möglichkeit zur Ermittlung von Produktdaten 18 von angebotenen Ressourcen 12 besteht darin, dass die Serverplattform 2 dazu eingerichtet ist, im Netzwerk 6 veröffentliche Daten beispielsweise des Ressourcenanbieters 3c zu ermitteln und auszuwerten. Hierzu können Produktdaten 18 des zumindest einen Ressourcenanbieters 3a, 3b, 3c durch ein Abfragetool 27 der Serverplattform 2 bestimmt werden, wobei das Abfragetool 27 in einem Netzwerk 6, insbesondere im Internet, verfügbare Produktdaten 18 des zumindest einen Ressourcenanbieters 3a, 3b, 3c ermitteln und auswerten kann, und dass die ermittelten Produktdaten 18 mit verfügbaren Produktdaten 18 anderer Ressourcenanbieter 3a, 3b, 3c verglichen werden.

Hierzu kann über ein Portal 19 die von der Serverplattform 2 aggregierte Ressourcenanfrage an die Ressourcenanbieter 3a, 3b, 3c, die anhand der verfügbaren Produktdaten 18 von der Serverplattform 2 ermittelt wurden, übermittelt werden. Den Ressourcenanbietern 3a, 3b, 3c eröffnet sich dadurch in einem Verfahrensschritt 20 die Möglichkeit, die aggregierte Ressourcenanfrage zu prüfen und ein Angebot auf Basis der in der Datenbank 16 der Serverplattform 2 hinterlegten Produktdaten 18 zu versenden oder ein bestehendes Angebot, beispielsweise auf Basis einer veröffentlichten oder übermittelten Preisliste, zu modifizieren. Im Verfahrensschritt 21 wird über das Portal 19 das Angebot des jeweiligen Ressourcenanbieters 3a, 3b, 3c an die Serverplattform 2 übermittelt und von der Auswerteeinheit 17 in einem Entscheidungsschritt 22, in welchem die aggregierte Ressourcenanfrage mit den Angeboten abgeglichen wird, angenommen oder abgelehnt.

Im Fall der Annahme wird im Verfahrensschritt 23 automatisch die Bestellung durch das Serverportal 2 ausgelöst und an den ausgewählten Ressourcenanbieter 3a, 3b, 3c übermittelt. Hierzu wird im Verfahrensschritt 24 eine entsprechende Bestellung mittels des Portals 19 an den ausgewählten Ressourcenanbieter 3a, 3b, 3c übersandt. Dies führt im Verfahrensschrittschritt 25 zur Auslösung der Bestellung. Mit dem Verfahrensschritt 26 ist die Auslieferung der bestellten Ressourcen 12 zu den landwirtschaftlichen Betrieben 1a, 1b, 1c bezeichnet, die durch die Serverplattform 2 zusammengeführt wurden.

### Bezugszeichenliste

- 1a, 1b, 1c: Landwirtschaftlicher Betrieb
- 2: Serverplattform
- 3a,3b,3c: Ressourcenanbieter
- 4: Verwaltungssystem
- 5: Verwaltungssystem
- 6: Netzwerk
- 7: Arbeitsmaschine
- 8: Arbeitsaggregat
- 9: Rohstoff
- 10: Hilfsmittel
- 11: Betriebsmittel
- 12: Ressource
- 13: Kommunikationsmittel
- 14: Eingabeschnittstelle
- 15: Datenschnittstelle
- 16: Datenbank
- 17: Auswerteeinheit
- 18: Produktdaten
- 19: Portal
- 20: Verfahrensschritt
- 21: Verfahrensschritt
- 22: Entscheidungsschritt
- 23: Verfahrensschritt
- 24: Verfahrensschritt
- 25: Verfahrensschritt
- 26: Verfahrensschritt
- 27: Abfragetool

## Patentansprüche

1. Verfahren zur Vernetzung von mehreren landwirtschaftlichen Betrieben (1a, 1b, 1c) mittels einer Serverplattform (2), wobei die landwirtschaftlichen Betriebe (1a, 1b, 1c) zur Planung von landwirtschaftlichen Prozessen, zur Durchführung der landwirtschaftlichen Prozesse sowie zur Verwaltung von erforderlichen Ressourcen (12) zumindest ein computergestütztes Verwaltungssystem (4, 5) verwenden,
wobei die Serverplattform (2) eine Eingabeschnittstelle (14) aufweist, welche der Eingabe und/oder dem Empfang von auswählbaren Basisdaten eines jeden mit der Serverplattform (2) verbundenen Betriebes (1a, 1b, 1c) dient,
wobei die Serverplattform (2) eine Datenschnittstelle (15) aufweist, welche der Bereitstellung von Informationen über Ressourcen zur Durchführung der landwirtschaftlichen Prozesse dient, die von zumindest einem Ressourcenanbieter (3a, 3b, 3c) bereitgestellt werden,
wobei die Serverplattform (2) eine Auswertung der von dem zumindest einen Verwaltungssystem (4, 5) übermittelten Basisdaten durchführt, um wenigstens einen Ressourcenbedarf mehrerer Betriebe (1a, 1b, 1c) zu aggregieren, und
wobei die Serverplattform (2) unter Berücksichtigung der aggregierten Ressourcenbedarfe und der Informationen des zumindest einen Ressourcenanbieters (3a, 3b, 3c) automatisch einen Ressourcenanbieter (3a, 3b, c) auswählt und das mit dem wenigstens einen aggregierten Ressourcenbedarf korrespondierende Angebot übermittelt.

2. Verfahren nach Anspruch 1, **dadurch gekennzeichnet, dass** die Ressourcenbedarfe der landwirtschaftlichen Betriebe (1a, 1b, 1c) hinsichtlich ihrer Identität oder Ähnlichkeit geprüft und aggregiert werden.

3. Verfahren nach Anspruch 1 oder 2, **dadurch gekennzeichnet, dass** die Ressourcenbedarfe der landwirtschaftlichen Betriebe (1a, 1b, 1c) hinsichtlich einer zeitlichen Bedarfsübereinstimmung geprüft und aggregiert werden.

4. Verfahren nach einem der Ansprüche 1 bis 3, **dadurch gekennzeichnet, dass** landwirtschaftliche Betriebe (1a, 1b, 1c) hinsichtlich des Bestehens einer räumlicher Nähe zueinander mittels Lokalisierungsdaten geprüft und aggregiert werden.

5. Verfahren nach einem der vorangehenden Ansprüche, **dadurch gekennzeichnet, dass** als Ressourcen (12) der landwirtschaftlichen Betriebe (1a, 1b, 1c), für die Ressourcenbedarf besteht, Rohstoffe (9), Hilfsmittel (10), Betriebsmittel (11) und/oder Ersatzteile für landwirtschaftliche Arbeitsmaschinen (7) und/oder landwirtschaftliche Arbeitsaggregate (8) durch die Serverplattform (2) vermittelt werden.

6. Verfahren nach einem der vorangehenden Ansprüche, **dadurch gekennzeichnet, dass** der jeweilige Ressourcenbedarf eines einzelnen landwirtschaftlichen Betriebes (1a, 1b, 1c) auf der Basis von in dem zumindest einen Verwaltungssystem (4, 5) hinterlegten quantifizierbaren Daten bestimmt wird, wobei es sich um Stammdaten, Verbrauchsdaten, Lagerbestandsdaten, Planungsdaten, Ertragsdaten sowie Beschaffungsdaten handelt.

7. Verfahren nach einem der vorangehenden Ansprüche, **dadurch gekennzeichnet, dass** die Aggregation von Ressourcenbedarfen miteinander vernetzter landwirtschaftlichen Betrieben (1a, 1b, 1c) in Abhängigkeit von spezifischen betriebswirtschaftlichen Daten durchgeführt wird, welche über die Eingabeschnittstelle (14) von dem jeweiligen Betrieb (1a, 1b, 1c) bereitgestellt werden.

8. Verfahren nach einem der vorangehenden Ansprüche, **dadurch gekennzeichnet, dass** Informationen des zumindest einen Ressourcenanbieters (3a, 3b, 3c) durch ein Abfragetool der Serverplattform (2) bestimmt werden, wobei das Abfragetool in einem Netzwerk (6), insbesondere im Internet, verfügbare Produktdaten (18) des zumindest einen Ressourcenanbieters (3a, 3b, 3c) ermittelt und auswertet, und dass die ermittelten Produktdaten (18) mit verfügbaren Produktdaten (18) anderer Ressourcenanbieter (3a, 3b, 3c) verglichen werden.

9. Verfahren nach einem der vorangehenden Ansprüche, **dadurch gekennzeichnet, dass** von der Serverplattform (2) eine Anfrage in Abhängigkeit vom bestimmten Ressourcenbedarf zur Bereitstellung von Produktdaten (18) durch den zumindest einen Ressourcenanbieter (3a, 3b, 3c) an diesen automatisiert generiert und versandt wird.

10. Verfahren nach einem der vorangehenden Ansprüche, **dadurch gekennzeichnet, dass** der zumindest eine Ressourcenanbieter (3a, 3b, 3c) mittels der Datenschnittstelle (15) für die Angebotserstellung relevante Produktdaten (18) bezüglich seiner Ressourcen (12) bereitstellt.

11. Verfahren nach Anspruch 9 oder 10, **dadurch gekennzeichnet, dass** eine Antwort des zumindest einen Ressourcenanbieters (3a, 3b, 3c) auf die Anfrage und/oder mittels der Datenschnittstelle (15) bereitgestellte relevante Produktdaten (18) von der Serverplattform (2) automatisch ausgewertet und mit verfügbaren Produktdaten (18) anderer Ressourcenanbieter (3a, 3b, 3c) verglichen werden, und dass auf Grundlage der Auswertung ein optimiertes Angebot erstellt wird.

12. Verfahren nach einem der vorangehenden Ansprüche, **dadurch gekennzeichnet, dass** das Angebot an das jeweilige Verwaltungssystem (4, 5) der vernetzten Betriebe (1a, 1b, 1c) übermittelt wird.

13. Verfahren nach einem der vorangehenden Ansprüche, **dadurch gekennzeichnet, dass** das zumindest eine Verwaltungssystem (4, 5) eines landwirtschaftlichen Betriebes (1a, 1b, 1c) zentral auf der Serverplattform (2) bereitgestellt und ausgeführt wird.

14. Verfahren nach einem der vorangehenden Ansprüche, **dadurch gekennzeichnet, dass** zum Datenaustausch zwischen den Verwaltungssystemen (4, 5) eines jeweiligen landwirtschaftlichen Betriebes (1a, 1b, 1c) und der Serverplattform (2) eine plattformunabhängige Sprache oder ein plattformunabhängiges Kommunikationsprotokoll verwendet wird.

15. Serverplattform (2) ausgestaltet zur Verwendung in einem Verfahren nach einem der vorangehenden Ansprüche.
